# EUROPEAN PATENT APPLICATION

(11) **EP 1 513 357 A1**
(43) Date of publication of application: **09.03.2005**
(21) Application number: 03292161.1
(22) Date of filing: 03.09.2003
(51) Int. Cl.: H04Q 7/30

(54) **Base station with several processing units for a wireless communications system**

(71) Applicant: Nortel Networks Limited, St. Laurent, Quebec H4S 2A9 (CA)
(72) Inventor: Gruet, Christophe, 78180 Montigny le Bretonneux (FR); Jamond, Jean Francois, 78960 Voisins le Bretonneux (FR); Cavagna, Jean Marc, 78120 Rambouillet (FR)
(74) Representative: Bird, William Edward

(57) **Abstract**

A base station (BTS) for a wireless communications system comprises a transmit chain (CEM1, CCM 42, TRM 30, PA 24, 16-2, 12-2) for processing signals for transmission to terminals. The signals can include those for a common channel for transmission to terminals served by the base station, such as the Primary Common Pilot Channel (P-CPICH) of a UMTS system. N processing units (CEM1, CEM2, CEM3), where N>=2, generate the same signals for a common channel in parallel with one another. This has the advantage of increasing the ability of the base station to retain calls in the event of a failure in one of the processing units.

## Description

### FIELD OF THE INVENTION

This invention relates to wireless telecommunications systems and methods of operating the same especially to cellular radio mobile telephone networks with sectored cells or not and methods of operating the same and to network elements used therein such as base stations or base station systems.

### BACKGROUND TO THE INVENTION

Wireless cellular communications systems are now widely deployed. Users demand a high quality of service from such systems and, with increased competition between operators, this has prompted operators to ensure their network is as robust as possible. One way of coping with failure in a network is to provide redundancy in the form of a second, stand-by, apparatus which can be brought into service at short notice; a process known as 'hot-swapping'. However, hot-swapping usually involves some disruption to service. This is because there is a delay from the time that a fault first occurs to detecting that a fault has occurred and bringing the stand-by apparatus to a stage where it can take over. In most cases the disruption is short-lived, but even a short delay can result in substantial loss of service.

In most systems, there are two types of channels in use. There are channels which are dedicated to carrying terminal-specific information, such as control information, or traffic data such as voice, data, or multimedia communications of a transmission. There are also common channels which are broadcast to all terminals within a coverage area such as cell or sector, and even to terminals outside of the cell. These common channels provide a service to a number of terminals and can be used, for example, to specify frequencies, codings, rates, and to identify base stations and for making measurements which can form the basis of a handover decision. Taking the example of a first generation cellular mobile telephone system such as a CDMA system in accordance with IS95 or more particularly for example a third generation (3G) cellular system such as UMTS, one of the common channels carries a pilot signal called in the UMTS standards "the Primary Common Pilot Channel" (P-CPICH) which is received by terminals and is used, among other things, to determine which base stations offer the strongest signal for a possible handover. This pilot signal is generated by a base station and is broadcast in the relevant radio coverage area such as a cell or a sector of a cell. In the event of a failure of the apparatus which provides the P-CPICH, it has been found that a loss of service of at least 2 seconds can result before the system can recover. This is long enough to cause a significant number of calls to be dropped, i.e. service to a cell or sector is disrupted for all or a majority of mobile terminals communicating at that time.

Accordingly, the present invention seeks to provide an improved method and apparatus for providing a common channel in a cellular wireless telecommunications system, especially from a base station of the system.

### SUMMARY OF THE INVENTION

A first aspect of the present invention provides a base station for a cellular wireless communications system comprising a transmit chain for processing signals for transmission to user terminals, the signals being organised in channels for transmission to terminals served by the base station, the transmit chain comprising a plurality of processing units for processing the signals and wherein the signals for one channel are generated in parallel by N of the processing units where N>=2. The same signals are generated in parallel, i.e. the N processing units process copies of the same signals. This results in a redundancy which assists when one of the processing units fails to work properly in maintaining service, even if this is at a reduced power.

Distributing responsibility for generating the signals for one channel across a number of processing units has the advantage of increasing the ability of the base station to retain calls in the event of a failure in one of the processing units without any time delay. In the event of a failure of a processing unit, N-1 others of the N processing units continue to transmit a portion of the channel signals. Preferably, in a steady state, each of the N processing units is responsible for providing 100/N% of the total power required for the channel signals. Because each of the processing units are operating in parallel, the power transmitted drops to an N-1^{th} of the original power but there is generally no disruption to service when only one of the processing units fails as the resulting power is still adequate even when N = 2. In the event of a failure of a processing unit, terminals served by the base station should continue to receive and demodulate the relevant channel (at a reduced power level). Re-establishing normal operation at the base station can be delayed until a service unit is available and the maintenance work can be planned in without loss of service.

Preferably, in the event of a failure of one of the processing units, either the power contributed by at least one of the remaining processing units is increased or a further processing unit is used to generate the channel signals.

Typically, the processing units are baseband processing units which generate channel signals at baseband. A processing unit may be part of a larger piece of apparatus.

Preferably, the number N of processing units which process the channel signals is variable in use. For example, the number of processing units which process the channel signals can be varied according to the level of traffic flow at the base station. For example, when the channel is a common channel, the number of processing units responsible for generating the channel signals can be reduced as the level of traffic flow at the base station increases. In this case a trade off is made between the loss of traffic capacity caused by the use of the plurality of processing units and against the danger of a breakdown in one of the processing units.

In accordance with a further aspect of the present invention the combination of signals which is done to generate the final signal, i.e. the adding together or other type of combination of signals from N hardware units to generate a final signal to be emitted is preferably centralized on a hardware unit within a base station.

The present invention finds advantageous use in its application to signals which would normally be processed by a single processing unit in a base station. Such signals can be those to be transmitted in a common channel, especially pilot or beacon signals. Particular, embodiments of the invention are described with reference to the Primary Common Pilot Channel (P-CPICH) in a Universal Mobile Telephone System (UMTS). However, other signals can be processed in this way, e.g. signals for a dedicated channel where the channel is dedicated to a single user, or to dedicated channels which are shared by several user terminals. In the latter case, the signals on the channel can be characterised by an internal address which allows the user terminal to determine that a message is destined for that terminal. This is an example of a mode of use of a channel in which signals are dedicated to one user terminal and is also included within the scope of the present invention.

A second aspect of the present invention provides a control apparatus for a base station in a wireless communications system, the base station comprising a transmit chain for processing signals for transmission to user terminals, the being organised in channels for transmission to user terminals served by the base station, the transmit chain comprising a plurality of processing units for processing the signals, wherein the control apparatus is arranged to generate the signals for one channel by instructing N of the processing units, where N>=2, to generate the same signals for one channel in parallel with one another.

A further aspect of the present invention provides a method of providing a signals to user terminals served by a base station in a wireless communications system comprising distributing the responsibility for generating the signals for one channel across a number N of processing units in a transmit chain (where N>=2) such that N of the processing units process the same signals for one channel in parallel.

The functionality described here can be implemented in software, hardware or a combination of these. Accordingly, another aspect of the invention provides software for controlling operation of the base station. The software may be installed on the base station at the time of manufacture or commissioning, or it may be installed onto an existing base station at a later date as an upgrade. The software may be stored on an electronic memory device, hard disk, optical disk or other machine-readable storage medium. The software may be delivered as a computer program product on a machine-readable carrier or it may be downloaded directly to the base station via a network.

The present invention also includes a wireless communications system comprising at least one transmit unit for processing signals for transmission to user terminals, the signals being organised in channels for transmission to the user terminals, the transmit unit comprising a plurality of processing units for processing the signals and wherein the signals for one channel are generated in parallel by generating the same signals in N of the processing units where N>=2.

The present invention will now be described with reference to the following drawings.

### BRIEF DESCRIPTION OF THE DRAWINGS

Figure 1 shows part of a cellular wireless communications system which can be used with the present invention.
Figure 2 shows a base station for use in the system of Figure 1.
Figure 3 shows a switching entity in the base station of Figure 2 in more detail.
Figure 4 shows a transceiver unit of the base station of Figure 2 in more detail in accordance with an embodiment of the present invention.
Figure 5 shows the configuration of a processing unit within the base station of Figure 2 to generate a common channel.
Figures 6A-6D show various examples of how a common channel can be provided by a number of the processing units of Figure 2 in accordance with embodiments of the present invention.

### DESCRIPTION OF PREFERRED EMBODIMENTS

The present invention will be described with reference to certain drawings and embodiments but the present invention is not limited thereto but only by the attached claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The present invention relates to wireless telecommunications networks especially mobile cellular telephone systems e.g. wideband or narrow band, such as a UMTS, GSM, IS 95 or IS-136 public mobile telephone network, a private radio Local Area Network 30, such as a HIPERLAN /1 or /2 network in a hotel lounge, a private personal radio network such as a BlueToooth local access network which may be connected to a Local Area Network e.g. in supermarket, a railway station or an airport. Information on GSM systems can be found in the book "The GSM System of Mobile Communications", by Mouly and Pautet, Cell & Sys, 1992. Information on the IS-936 system can be found in the book "IS-136 TDMA Technology, Economics and Services", by Harte, Smith, Jacobs, Artech House, 1998. Information on the IS-95 system can be found in the books "CDMA Systems Engineering Handbook", Lee and Miller, Artech House, 1998 and "CDMA for Wireless Personal Communications", Prasad, Artech House, 1996. Information on wideband CDMA such as UMTS systems may be found in the books "WCDMA for UMTS", by Holma and Toskala, Wiley, 2001 and "Wideband CDMA for third generation mobile communications", Ojanperä and Prasad, Artech House, 1998. Particularly spread spectrum systems, especially direct sequence spread spectrum systems, whether wide band or narrow band, such as CDMA networks, for example UMTS or IS-95 or CDMA2000, can be operated in accordance with the present invention. The design and construction of Wireless LAN's is discussed in detail in, for example, "Wireless LAN's" by Jim Geier, Macmillan Technical Publishing, 1999. OFDM systems are described in "OFDM for wireless multimedia communications", R. Van Nee and R. Prasad, Artech House, 2000. Any of the networks may be cellular networks.

The terms terminal or user terminal or mobile unit should be interpreted in a broad sense and may include any suitable user equipment whether stationary or mobile such as, mobile telephones, smart phones, PDA's or laptops with mobile termination, or for example, portable, pocket, hand-held, computer-included, or car-mounted mobile devices which communicate via voice and/or data/multimedia.

Further, the present invention will mainly be described with respect to its application to common channels which is a particularly preferred embodiment of the present invention. However, the present invention may be applied to signals for other types of channels, e.g. traffic channels, dedicated channels. In addition, in the following description, embodiments of the invention are described with reference to the Primary Common Pilot Channel (P-CPICH) in a Universal Mobile Telephone System (UMTS). However, this description is by way of example only.

The term "channel" is understood as an identified portion of an interface, e.g. in this case an air interface of a wireless system. A channel is generally defined by its characteristics in terms of transmission support and not by a potential use. A common channel contains signals which are broadcast to a large number of user terminals. A channel may have several uses, for instance a channel may be shared by several users and the signals for one user are identified by an internal address. A dedicated channel is a channel which has been constructed for a particular use, e.g. for a particular user terminal. The present invention may be applied to all types of channels including common channels, dedicated channels which are dedicated to one user terminal and mode of use of dedicated channels in which the user terminal identifies the relevant signals by means of an internal address.

As indicated above, the present invention finds use with a wide variety of cellular wireless systems, especially spread spectrum systems of which CDMA systems such as IS95 and UMTS are only two examples. For example, the codes used to separate user terminal transmissions are mathematical objects that can be managed by different hardware units. In one aspect of the present invention signals for one single communication can be split over different hardware units each of them providing a respective part of the final power dedicated to the transmission. The implementation may include a power control loop, e.g. for a traffic channel. For example, the power control command can be applied equally on the N hardware units involved in the call. A common channel is preferably broadcast with constant power.

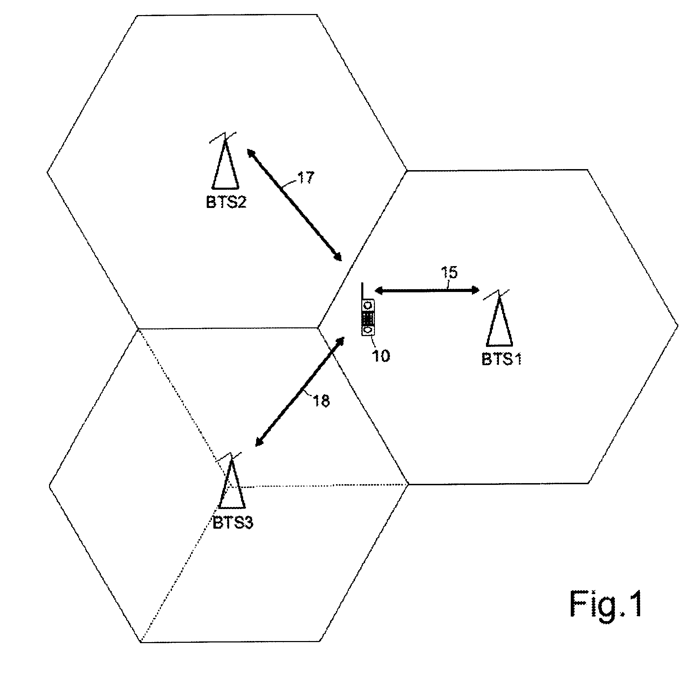

Figure 1 shows a part of an example cellular wireless communications system with a first base station BTS1, a second base station BTS2 and a third base station BTS3 each defining a coverage area. Base stations may be omni-directional (BTS1, BTS2) or sectored (BTS3), as is well known in the art. Terminals 10 are usually served by a single base station which is closest to the terminal or which offers the best quality of service. However, there are also occasions when two or more base stations may simultaneously serve a terminal, such as during the processes of handover or soft handover. Also, in preparation for a handover, a terminal may receive transmissions from a number of neighbouring base stations which are not yet serving the terminal in order to gather data which will help the network to decide which base station is best-suited to serving the terminal. In UMTS, each base station transmits a common pilot channel (C-PICH) which is received by terminals and used to decide which neighbouring base stations are likely candidates for a handover.

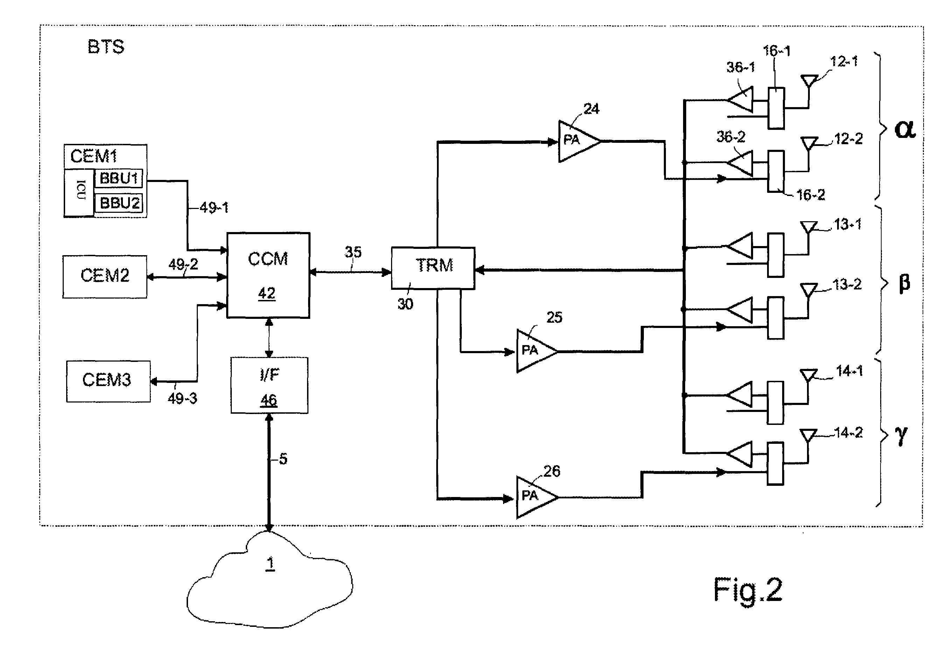

Figure 2 shows an example base transceiver station (BTS). The baseband section of the BTS includes a core switch CCM 42, an interface 46 to the operator's network 1 and a plurality of signal processing units CEM1, CEM2, CEM3. Signals in Packet Data Format including user messages and control signals may be provided on a connection 5 (e.g. a 2 Mbit E1 link) between the network I and the BTS, the signals being received at the interface 46 and passed from there to the core switch CCM 42. Similarly, messages switched through core switch CCM 42 to the network 1 from the BTS are prepared in interface 46 for transmission along connection 5 to the network 1. The core switch 42 is responsible for controlling the complete operation of the transmission and reception of signals to and from the antennas 12-14 and to and from the signal processing units CEM1, CEM2, CEM3 and the interface 46. The signal processing units CEM1, CEM2, CEM3 may be adapted to carry out one or more of the following functions: modulation, demodulation, channel equalization, error coding such as parity coding, forward error correction coding and decoding, channel coding and decoding such as convolutional coding, speech compression codec, data processing and/or video codecs, interleaving, spreading such as direct sequence spreading, pulse shaping, frame processing, combining such as maximal ratio combining or selective combining, puncturing, encryption or decryption. It is preferred that CEMs are capable of processing common channel signals as well as normal terminal-dedicated traffic. As shown in CEM1, a CEM may comprise a number of separate baseband units BBU1, BBU2 which each have signal processing capability.

In a preferred embodiment of the present invention each CEM is a hardware unit containing 2 BBU and one Internal Control Unit. The CCM communicates with external (e.g. with a radio network controller RNC or base station controller) and receives and sends all the messages relative to Call Processing (Radio Link Setup / Radio Link Delete / Radio Link Reconfigure, etc. The ICU commands a relevant and available BBU which performs the work in terms of signal processing algorithms, e.g. modulation/demodulation/rake procesing/channel coding & decoding. A BBU may comprise in one or more digital signal processors (DSP), e.g. 4 to 6 as required, and ASICs (chip level). For downlink channels it controls the chip flow relative to the channels open and managed by the BBU. For uplink it receives the chip flow and produces after demodulation the bit flow which is sent to external, e.g. to an RNC. The BBU and ICU may be implemented on the same telecommunications board to form a CEM.

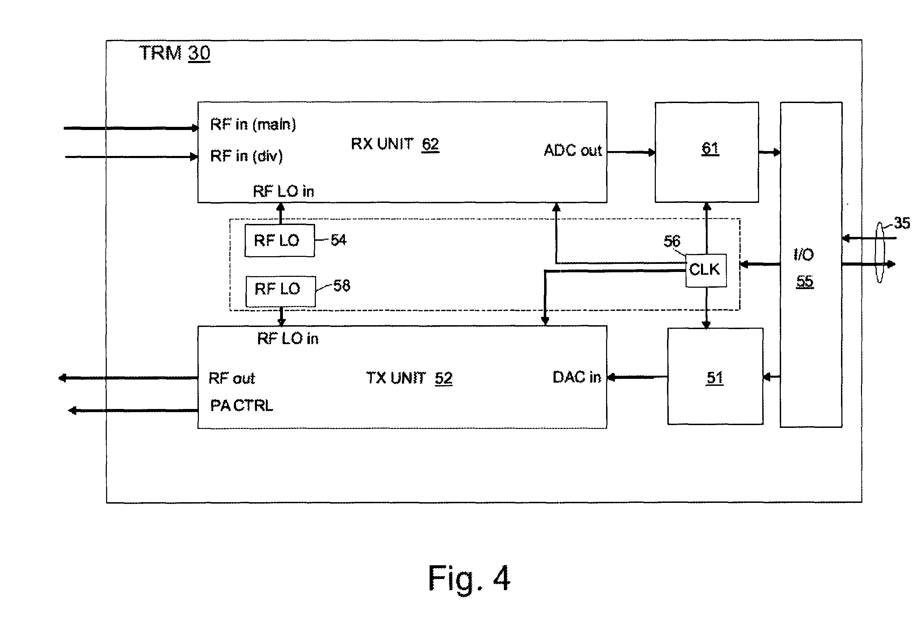

The core switch CCM 42 is connected 35 to a transceiver unit TRM 30, as shown in Figure 4. Transceiver unit TRM 30 performs digital to analog conversion and up-conversion to RF for signals to be transmitted, and performs down-conversion from RF and analog-to-digital conversion on received signals. The arrangement shown in Figure 2 has three sectors: α, β and γ. The transceiver unit TRM 30 comprises at least one transmitter unit 52 and at least one receiver unit 62. In a typical arrangement, different signals will be transmitted in each sector α, β, γ, e.g. in sector α a signal from a transmit unit in TRM 30 is amplified by power amplifier 24, passed through duplexer 16-2 and transmitted from antenna 12-2. Signals are received by a pair of spatially offset antennas 12-1, 12-2, passed through duplexers 16-1, 16-2, amplified by low noise amplifiers 36-1, 36-2 and passed to a receive unit of TRM 30 for processing. In a more elaborate arrangement, transmit diversity may be used, with the same signal being transmitted by both antennas 12-1, 12-2 in sector α or with the same signal being transmitted in more than one of the sectors α, β, γ. Also, additional receive diversity may be used, with signals being received from a terminal via antennas 13-1, 13-2, 14-1, 14-2 as well as antennas 12-1, 12-2. These techniques are well known and do not need to be described any further.

Preferably, the cellular mobile communications system supports soft handover between cells (inter-cell soft handover). Soft handover is described in US 5,625,876. In soft handover, the mobile terminal 10 continuously monitors the signal strength of pilot signals from neighboring transmitters (e.g. in Figure 1 see signal 17 from BTS2 and signal 18 from BTS3) and reports the results at regular intervals. When the network receives this report, the network controller may decide to place the mobile terminal 10 in soft handover. In this case the network instructs one or more additional base station transceivers BTS2, BTS3 to communicate with the mobile terminal. For example, transmitted signals from two adjacent cells (or two adjacent sectors of one cell) may be transmitted to and combined in a mobile terminal 10 (downlink). To do this the network instructs two base stations in different cells (sectors) to transmit the same user message to a mobile terminal 10. The selection of which additional base station would be best to include in the soft handover may be assisted by the reports sent by the mobile terminal 10 about pilot signal strengths from neighboring base stations. Optionally, during soft handover, the network may also decide to demodulate the same message from the one mobile terminal at two or more receiving cell sites (uplink) and then to combine these at a suitable location in the network 1. The main effect of soft handover is to provide a form of spatial diversity on the downlink and there is a corresponding increase in signal quality as received at the mobile terminal 10. Usually, more than two cell sites can be in soft handover at one time with a single mobile terminal 10, the number being determined by the number of fingers on the Rake receiver of the mobile terminal 10.

A transceiver unit 30 in accordance with an embodiment of the present invention is shown schematically in Fig. 4. It comprises an interface 55 for transmitting to, and for receiving from the serial connection 35 digital bit streams. The transceiver unit 30 also includes one or more transmitter units 52 coupled to the interface 55 via digital filter/pulse shaper 51 which is clocked by a clock signal provided by a clock signal circuit 56. In accordance with one embodiment of the present invention, one transmitter unit 52 may be provided for each carrier frequency with which the transceiver unit 30 may be used either initially or later. The transmitter unit 52 has a single bit stream input and includes a digital to analog converter 53 for converting the digital bit stream received from the core switch 42 via serial bus 35 into intermediate frequency (IF) analog signals. The D/A converter is clocked by a signal from clock circuit 56. These analog IF signals are up-converted to the carrier radio frequency in transmitter unit 52 using a radio frequency local oscillator 58 which may be common to all transmitter units in the transceiver unit 30 or may be an individual oscillator 58, one oscillator 58 being provided for each transmitter unit 52.

Alternatively, the transmitter unit 52 may be a multi-carrier transmitter unit. A multicarrier transmitter unit differs from a single carrier transmitter unit in that a part of the up-converting to analogue RF frequencies is carried out with the digital signals. Each digital signal relating to one carrier received from the core switch 42 is multiplied by the output of a numerically controlled oscillator in a modulator to provide a frequency offset relevant to the final carrier frequency. The digital signals are then added together and converted to analogue and upconverted with a single frequency. The offset from the up-converting frequency determines the carrier frequency.

Transceiver unit TRM 30 also has one or more receiver units 62 coupled to the interface 55 by a digital filter/pulse shaper 61. Each receiver unit 62 has at least one input RF input from one of the antennas 12-14. Where two antennas are used per sector (one for spatial diversity) each receiver unit 62 has two RF inputs - the main and diversity input. The received analog RF signal or signals are down-converted to an IF analog signal or signals using the local oscillator 54 (each receiver unit may have n individual local oscillator 54). Each IF signal is then fed to an analog to digital converter which is clocked by the clock signal from the clock circuit 56. The digital bit stream is filtered/pulsed shaped in the digital filter 61 before being passed to the interface 55.

Referring again to Figure 2, one of the signals generated by processing units CEM1, CEM2, CEM3 is the Primary Common Pilot Channel (P-CPICH). This is a fixed rate (30 Kbps, spreading factor=256) common downlink physical channel that carries a pre-defined bit/symbol sequence. The same downlink (DL) channelization code is always used for the primary CPICH, whatever the cell. The primary CPICH is scrambled by the primary scrambling code of the cell it belongs to. There is only one primary CPICH per cell, regardless of the number of sectors, which is broadcast over the entire cell. As well as being used for handover decisions, this channel is used as a reference for a number of other downlink and uplink physical channels as described in 3GPP TS 25.211. To generate the CPICH, a predefined sequence which is described in the standard 25.211 is spread using the correct OVSF. Then the chip flow is prepared using the primary scrambling code of the cell. These operations are performed within a CEM, for example by a baseband unit (BBU) comprising a digital signal processor (DSP) .

In accordance with the invention, the responsibility for generating the P-CPICH is shared by a number of processing units CEM1, CEM2, CEM3. This requires processing resources which are capable of generating the P-CPICH channel to be located in a number of the CEMs.

The total P-CPICH power to be generated by the BTS is typically set by a network management entity, by sending an instruction to the BTS via the network 1 and interface 46. Each of the set of CEMs which are responsible for generating the P-CPICH adjusts the power of the signal it creates so that the total power of the set of generated P-CPICH signals equals the total required power. So, where there are N CEMs generating the P-CPICH, each of them will transmit 100/N % of the total P-CPICH Power

Distribution of the CPICH power should increase the ability of the BTS to retain orphan calls in case of cell crashes. If the primary CEM (for a given cell) becomes faulty, the respective primary CPICH is not totally lost because other CEMs continue to transmit a portion of the P-CPICH signal. As the CPICH is being generated in parallel by a plurality of CEM's, there is no delay when one CEM malfunctions - instead there is a power loss in the signal. Thus, terminals served by the BTS should continue to receive and demodulate the CPICH (at a reduced power level) during the time necessary to re-establish the BTS.

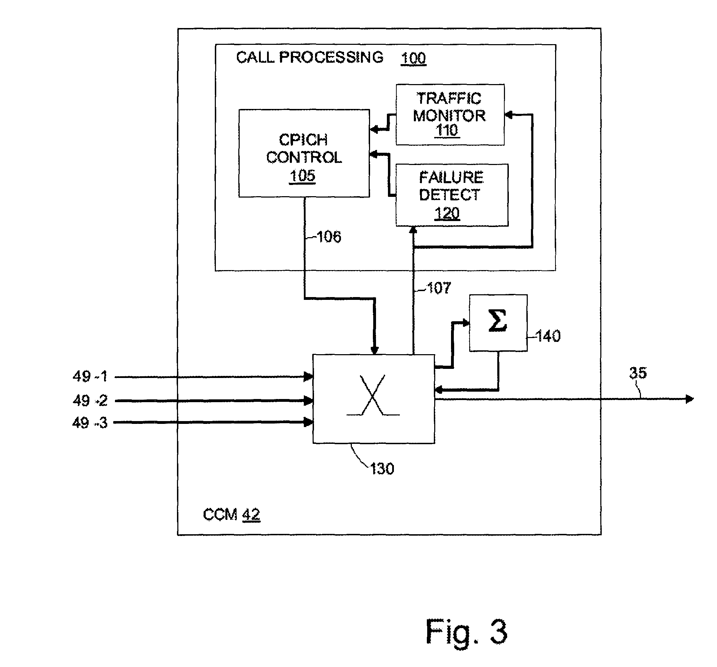

Not all CEMs, or BBUs within CEMs, may be able to generate the C-PICH. Referring to Figure 3, a CPICH control function 105 in CCM 42 dynamically maintains a list of BBUs which are capable of providing the P-CPICH.

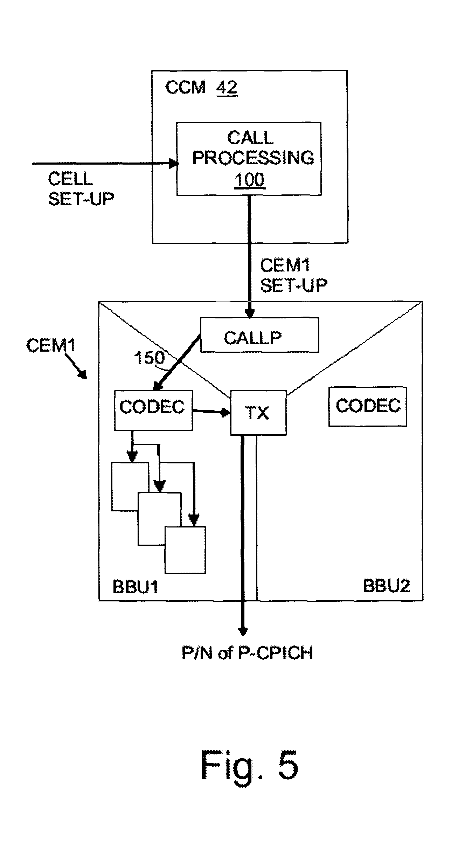

Referring to Figure 5, it is assumed that the call processing function 100 decides to put the cell (i.e. the primary CCPCH) on BBU1 of CEM1. BBU2 of CEM1 is not able to run the Cell's frequency. Each CEM of the set of CEMs selected by the CCM 42 to operate the P-CPICH receive a set-up message. This message specifies the total number of BBUs which will be providing the P-CPICH. This message is received by a call processing function CALLP within each CEM. The message is passed 150 onto a CODEC in each BBU which is to generate the P-CPICH. Each CODEC calculates the amount of power that it is required to contribute by dividing the total required power "PCPICHPower" by the number (N) of BBU which are providing the P-CPICH. Each CODEC generates the P-CPICH at the calculated power.

For each BBUₙ in the set of BBUs[1..N], the P-CPICH Power contribution of each BBU = Total P-CPICH Power / N.

The initial transmission power of all the downlink physical channels is calculated relative to the power of the P-CPICH. Call processing function 100 sets the initial downlink powers relatively to the total CPICH power. Spreading the P-CPICH transmission over a number of CEMs does not affect any other channels, since each CEM is provided with the total P-CPICH power at the initial cell set-up. Thus, each CEM is able to adjust the power of the other physical channels accordingly.

During the course of operation of the BTS, a number of events may cause existing CEMs to be removed from service, such as an unexpected failure of a CEM or a removal from service of a CEM for routine maintenance. CEMs may be upgraded in their capabilities and further CEMs may be added.

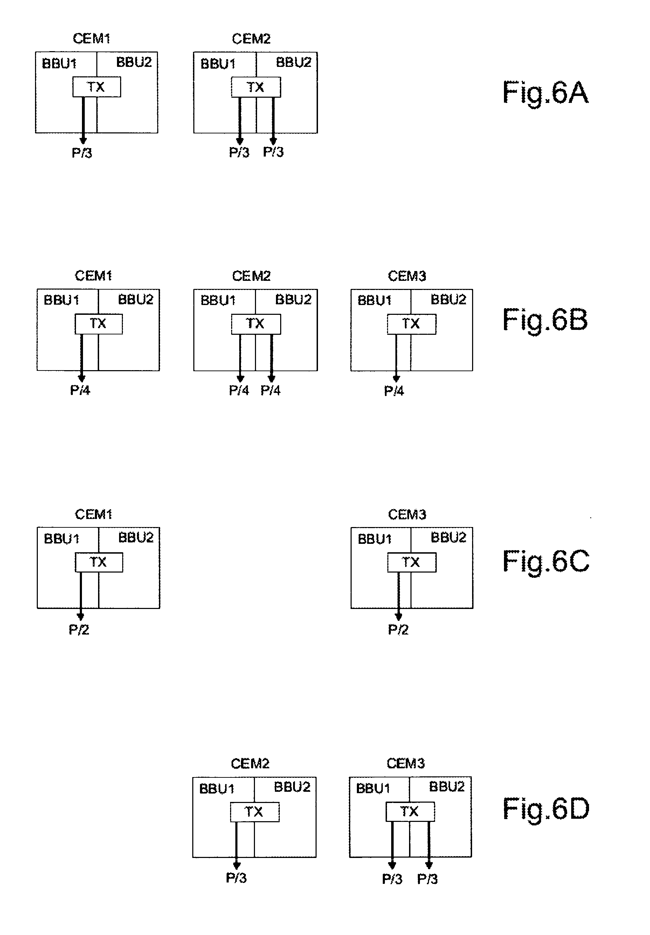

Referring now to Figures 6A-6D, these show some examples of how the P-CPICH is generated, and how the generation is changed as the CEM population varies. Beginning with Figure 6A, three BBUs each generate the P-CPICH, each of them delivering one third of the requested total primary CPICH power (P), i.e. P/3. In Figure 6B a third CEM, CEM3 is added to the base station. This may occur when an operator decides to increase the capacity of the base station. CEM3, BBU1 is able to provide the P-CPICH There are now 4 BBUs which are able to provide the P-CPICH and each will deliver one quarter of the P-CPICH power. The new BBU receives a set-up message which indicates the total number (4) ofBBUs providing the P-CPICH and the existing three BBUs receive a reconfiguration message which also indicates the total number ofBBUs providing the P-CPICH.

In Figure 6C it is assumed that there is a failure in CEM2. Referring again to Figure 6B, this CEM was in charge of emitting one half of the P-CPICH power. The failure is detected by unit 120 within the call processing unit 100. Upon discovering the failure of CEM2, CPICH control 105 issues a reconfiguration message to the remaining BBUs, informing them that there are now only two BBUs generating the P-CPICH. Upon receiving this message, the remaining BBUs increase their power contributions to P/2 each.

In Figure 6D there is a failure in CEM1 and there is a decision to re-establish the Cell on CEM2. There will now be three BBUs to generate the P-CPICH. Appropriate reconfiguration messages are sent to the affected BBUs, which respond by each generating one third of the total P-CPICH power.

As indicated above, signals from 2 or more CEM's may be used to generate a final signal for transmission. To synchronize the signals coming from different CEM's each signal preferably has a periodic marker relative to an absolute time/date. This marker can be a specific flag (like an HDLC flag) regularly placed in the flow. The marker may be generated by the CCM and distributed to all elements of the base station including each CEM, TRM, etc. The CCM collects all signals form the CEM's and performs an alignment of each signal relative to the marker.

Each of the CEMs (BBUs) that are responsible for generating the P-CPICH generate a signal at a particular amplitude. The P-CPICH signal is a bit sequence which is modulated by an appropriate spreading code and scrambling sequence. The amplitude of this signal is scaled, by a digital scaling factor, dependent on the required total power. Each P-CPICH signal contributed by a CEM (BBU) is sent 49-1, 49-2, 49-3, to the CCM 42 and summed 140 to form an overall P-CPICH signal. An aggregate (summed) P-CPICH signal is sent to the TRM 30 where it is amplified by a predetermined amount. The amplitude of the aggregate C-PICH signal is set such that the predetermined amount of gain provided by the power amplifier results in a P-CPICH signal at the required transmit power. In accorrance with an embodiment of the present invention antennas in each of the sectors α, β, γ can be sent an identical P-CPICH signal for transmission. However, within a cellular system a cell is relative to a system differentiation - 1 Scrambling Code per Cell and sector is relative to one geographical specific area. A sector may act as a cell from a cell management point of view. In this case, sector α, represents a separate cell and the C-PICH for cell defined by sector α is sent on sector α whereas for the β and γ sectors the respective C-PICH for these cells is sent. When a separate cell is not defined by a sector e.g. if one cell may comprise two or more geographical sectors, the C-PICH of the cell is broadcast on all individual sectors which make up that cell.

In an alternative embodiment, a plurality of CEMs generate C-PICH signals but instead of each CEM controlling the amplitude of the signal, each CEM contributes a fixed amplitude signal and the summer 140 takes responsibility for ensuring that the aggregate amplitude of the P-CPICH signal is correct, by applying an appropriate scaling factor to the summed digital signals contributed by the individual CEMs.

Figures 6A-6D describe arrangements where CEMs are added or dropped in response to new equipment being added to the BTS or failure of equipment. In a further alternative, the number of CEMs (BBUs) which are responsible for generating the P-CPICH is settable, i.e. can be varied according to the traffic demand on the BTS. Referring again to Figure 3, CCM 42 includes a traffic monitor function 110 for monitoring the traffic on the BTS. This feeds an indication of the monitored value to CPICH control 105. In the event that traffic increases to a level at which the available resources for traffic processing are low, CPICH control 105 can make a decision to reduce the number of CEMs (BBUs) responsible for generating the P-CPICH, thereby freeing resources for additional revenue-earning traffic. There is a trade-off between increased risk of loss of the C-PICH if this is being generated by a single CEM and the ability to provide service to more users. The control 105 may be configured to use more complex algorithms for deciding on how may CEM's may be safely used for the C-PICH, for example, running on the C-PICH being generated by a single CEM may be tolerated for a certain time under the assumption that it is a temporary overload. However, if this form of operation extends in time beyond a cut-off an appropriate action may be triggered, e.g. an alarm message for operations and maintenance.

The invention is not limited to the embodiments described herein, which may be modified or varied without departing from the scope of the invention.

## Claims

1. A base station for a wireless communications system comprising a transmit chain for processing signals for transmission to user terminals, the signals being organised in channels for transmission to user terminals served by the base station, the transmit chain comprising a plurality of processing units for processing the signals and wherein signals for a channel are generated by generating the same signals in parallel by N of the processing units where N>=2.

2. A base station according to claim 1 wherein, in a steady state, each of the N processing units is responsible for providing 100/N% of the total power required for a channel.

3. A base station according to claim 1 or 2, wherein the channel is a common channel.

4. A base station according to any previous claim, wherein, in the event of a failure of one of the processing units, the power contributed by at least one of the remaining processing units is increased.

5. A base station according to any of claims 1 to 3, wherein, in the event of a failure of one of the processing units, a further processing unit is used to generate the signals of the channel.

6. A base station according to any one of the preceding claims wherein the processing units are baseband processing units which generate the signals for the channel at baseband.

7. A base station according to claim 6 wherein the transmit chain further comprises an RF stage for up-converting the signals of the channel to an RF signal and for amplifying the RF signal.

8. A base station according to any one of the preceding claims wherein the number N of processing units which process the signals of the channel is variable in use.

9. A base station according to claim 8 wherein the number N of processing units which process the signals of the channel is variable according to the level of traffic flow at the base station.

10. A base station according to claim 9 wherein the channel is a common channel and the number N of processing units which process the signals of the common channel is reduced as the level of traffic flow at the base station increases.

11. A base station according to any one of the preceding claims wherein the channel is a pilot channel.

12. A base station according to claim 11 wherein the pilot channel is a Common Pilot Channel (CPICH).

13. A control apparatus for a base station in a wireless communications system, the base station comprising a transmit chain for processing signals for transmission to user terminals, the signals being organised in channels for transmission to user terminals served by the base station, the transmit chain comprising a plurality of processing units for processing the signals, wherein the control apparatus is arranged to generate the signals for one channel by instructing N of the processing units, where N>=2, to generate the same signals for one channel in parallel with one another.

14. A wireless communications network comprising a base station according to any one of claims 1 to 12 or a control apparatus according to claim 13.

15. A method of providing a signals organised in channel to terminals served by a base station in a wireless communications system comprising distributing the responsibility for generating the signals for one channel across a number N of processing units in a transmit chain, where N>=2, such that N of the processing units process the same signals of the one channel in parallel.

16. Software for controlling operation of a base station of a wireless communications system, the base station comprising a transmit chain for processing signals for transmission to user terminals, the signals being organised in channels for transmission to user terminals served by the base station, the transmit chain comprising a plurality of processing units for processing the signals, wherein the software is arranged, when executed by a control apparatus of the base station, to perform the step of distributing the responsibility for generating the signals for one channel across a number N of the processing units, where N>=2, such that N of the processing units process the same signals for one channel in parallel.
